(19) Europäisches Patentamt / European Patent Office / Office européen des brevets

(11) **EP 4 682 620 A1**

(12) **EUROPEAN PATENT APPLICATION**
published in accordance with Art. 153(4) EPC

(43) Date of publication:
**21.01.2026 Bulletin 2026/04**

(21) Application number: **23927590.2**

(22) Date of filing: **16.11.2023**

(51) International Patent Classification (IPC):
**G02C 7/02** $^{(2006.01)}$    **G02C 7/06** $^{(2006.01)}$

(52) Cooperative Patent Classification (CPC):
**G02C 7/02; G02C 7/06**

(86) International application number:
**PCT/JP2023/041189**

(87) International publication number:
**WO 2024/189981 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.03.2023  JP 2023038236**

(71) Applicant: **Hoya Lens Thailand Ltd.
Pathumthani 12130 (TH)**

(72) Inventor: **KAGA, Tadashi
Tokyo 160-8347 (JP)**

(74) Representative: **Betten & Resch
Patent- und Rechtsanwälte PartGmbB
Maximiliansplatz 14
80333 München (DE)**

(54) **SPECTACLE LENS DESIGN METHOD, METHOD FOR MANUFACTURING SPECTACLE LENS, SPECTACLE LENS DESIGN SYSTEM, AND PROGRAM FOR SPECTACLE LENS DESIGN SYSTEM**

(57) There is provided a method for designing a spectacle lens having an object-side surface and an eyeball-side surface, the method including: obtaining a distribution map of approximate curvature $C_p$ at each point on a surface $\alpha$, which is a design surface, on an xy plane coordinate system; performing smoothing filter processing to the distribution map; and designing a new surface $\alpha'$ based on the distribution map of a new approximate curvature $C_p'$ obtained by the smoothing filter processing.

**FIG. 1**

EP 4 682 620 A1

**Description**

Technical Field

The present invention relates to a method for designing a spectacle lens, a method for manufacturing a spectacle lens, a system for designing a spectacle lens, and a program for the system for designing a spectacle lens.

Description of related art

In paragraph [0008] of Patent Document 1, it is described that a convolution operation is performed using a Gaussian function to smooth discontinuity in a refractive power distribution function.

Prior art document

Patent document

[Patent Document 1] U.S. Patent Application Publication No. 2005/0254007

Summary of the invention

Problem to be solved by the invention

Even when smoothing is performed using the technique described in Patent Document 1, complex and large amounts of calculations are required as described in the embodiment of Patent Document 1. Particularly, according to Patent Document 1, when using a refractive power or curvature, it is required to use it as a surface rather than a point. In addition, the refractive power or curvature varies depending on a distance from a lens center. When this case is taken into consideration, an amount of work required for calculation increases.

An object of the present invention according to one example is to reduce the time required for performing smoothing filter processing to a spectacle lens.

Means for solving the problem

In order to solve the above problem, the present inventors have found to employ a concept of an approximate curvature, which will be described in detail later, in one example of the present invention, and to smooth a distribution map of the approximate curvature by a smoothing filter.

A first aspect of the present invention is a method for designing a spectacle lens having an object-side surface and an eyeball-side surface, the method including:

obtaining a distribution map of approximate curvature $C_p$ at each point on a surface $\alpha$, which is a design surface, on an xy plane coordinate system;
performing smoothing filter processing to the distribution map; and
designing a new surface $\alpha'$ based on the distribution map of a new approximate curvature $C_p'$ obtained by the smoothing filter processing,
wherein when wearing the spectacle lens, an axis passing through a lens center from an object side toward an eyeball side is z-axis, an axis perpendicular to the z-axis from bottom to top is y-axis, and an axis perpendicular to the z-axis from left to right is x-axis, and
the approximate curvature $C_p$ applied to the filter processing is defined as follows:
the approximate curvature $C_p$ at an arbitrary point p (x, y, z) on the surface $\alpha$ is calculated by using a reciprocal of a radius of a circle that passes through three points p' (-x, -y, z) and (0, 0, 0) that are rotationally symmetric with respect to the point p in a xy plane perpendicular to the z axis, and when the point p is (0,0,0), an average of two principal curvatures at the point p on the surface $\alpha$ is used as the approximate curvature $C_p$.

A second aspect of the present invention is the method for designing a spectacle lens according to the first aspect, wherein the spectacle lens is a progressive power lens having a near portion for viewing an object at a near distance, a distance portion for viewing an object at a distance farther than the near distance, and an intermediate portion for progressively increasing a refractive power between the near and distance portions.

A third aspect of the present invention is the method for designing a spectacle lens according to the first or second aspect, wherein the smoothing filter is a Gaussian filter.

A fourth aspect of the present invention is the method for designing a spectacle lens according to any one of the first to third aspects, wherein the Gaussian filter is long in x-axis direction.

A fifth aspect of the present invention is the method for designing a spectacle lens according to any one of the first to fourth aspects, wherein the smoothing filter is an averaging filter.

A sixth aspect of the present invention is the method for designing a spectacle lens according to any one of the first to fifth aspects,

wherein the spectacle lens is a progressive power lens having a near portion for viewing an object at a near distance, a distance portion for viewing an object farther than the near distance, and an intermediate portion for progressively increasing a refractive power between the near portion and the distance portion;

the near portion is a region having a refractive power of (spherical power S + addition power ADD - 0.12D) or more;

the distance portion is a portion for visually recognizing an object farther than a near distance and is a region having a refractive power within a range of (spherical power S $\pm$ 0.12D);

the method including:

judging at least either one of whether or not a difference between an addition power on a surface $\alpha$' designed in the designing and an addition power on a surface $\alpha$ before the smoothing processing exceeds a threshold value or whether or not a difference between a curvature of the distance portion on the surface $\alpha$' designed in the designing and a curvature of the distance portion on the surface $\alpha$ before the smoothing processing exceeds a threshold value,

wherein when it is judged to be different in the judging, a new z coordinate value $z_p$ (x, y) is obtained at each point using the following formula, and a redesign step is performed to design a surface $\alpha$" having the z coordinate value $z_p$ at each point.

[Formula 1]

$$z_p(x, y) = \frac{\left( \frac{\left( c_p(x, y) - c_{fa} \right) * \left( c_{nb} - c_{fb} \right)}{c_{na} - c_{fa}} + c_{fb} \right) * (x^2 + y^2)}{1 + \sqrt{1 - \left( \frac{\left( c_p(x, y) - c_{fa} \right) * \left( c_{nb} - c_{fb} \right)}{c_{na} - c_{fa}} + c_{fb} \right)^2 * (x^2 + y^2)}}$$

wherein $C_{fb}$ is a curvature of the distance portion before the smoothing processing, and $C_{nd}$ is a curvature of the near portion before the smoothing processing, $C_{fa}$ is a curvature of the distance portion after the smoothing processing, and $C_{na}$ is a curvature of the near portion after the smoothing processing.

A seventh aspect of the present invention is the method for manufacturing a spectacle lens, the method comprising processing a lens base material so as to realize a surface designed by the method for designing the spectacle lens according to any one of the first to sixth aspects.

An eighth aspect of the present invention is a system for designing a spectacle lens, which is a system for designing a spectacle lens having an object-side surface and an eyeball-side surface, the system including:

an approximate curvature map acquisition unit that obtains a distribution map of an approximate curvature $C_p$ on a xy plane coordinate system, at each point on a surface $\alpha$ that is a design surface;

a smoothing processing unit that performs smoothing filter processing to the distribution map; and

a design unit that designs a new surface $\alpha$' based on a distribution map of a new approximate curvature $C_p$' obtained by the smoothing processing unit.

A nineth aspect of the present invention is the system for designing a spectacle lens according to the eighth aspect, the system including:

a judgment unit that judges at least either one of whether or not a difference between an addition power on a surface $\alpha$' designed by the design unit and an addition power on a surface $\alpha$ before the smoothing processing filter processing exceeds a threshold value or whether or not a difference between a curvature of a distance portion on the surface $\alpha$' designed by the design unit and a curvature of a distance portion on a surface $\alpha$ before the filter processing exceeds a threshold value; and

a redesign unit that, when it is judged by the judgment unit that the threshold value is exceeded, obtains a new z coordinate value $z_p(x, y)$ at each point using the above formula, and designs a surface $\alpha''$ having the z coordinate value $z_p$ at each point.

A tenth aspect of the present inventio is a program for a system for designing a spectacle lens having an object-side surface and an eyeball-side surface, the program causing a computer to function as:

an approximate curvature map acquisition unit that obtains a distribution map of an approximate curvature $C_p$ on a xy plane coordinate system, at each point on a surface $\alpha$, which is a design surface;
a smoothing processing unit that performs smoothing filter processing to the distribution map; and
a design unit that designs a new surface $\alpha'$ based on a distribution map of a new approximate curvature $C_p'$ obtained by the smoothing processing unit.

An eleventh aspect of the present invention is a program for the system for designing the spectacle lens according to the tenth aspect, the system causing a computer to function as:

a judgment unit that judges at least either one of whether or not a difference between an addition power on a surface $\alpha'$ designed by the design unit and an addition power on a surface $\alpha$ before the smoothing filter processing exceeds a threshold value or whether or not a difference between a curvature of a distance portion on a surface $\alpha'$ designed by the design unit and a curvature of a distance portion on the surface $\alpha$ before the smoothing processing filter processing exceeds a threshold value; and
a redesign unit that, when it is judged by the judgment unit that the threshold value is exceeded, obtains a new z coordinate value $z_p(x, y)$ at each point using the above formula, and designs a surface $\alpha''$ having the z coordinate value $z_p$ at each point.

Advantage of the invention

According to one example of the present invention, the time required to apply smoothing filter processing to a spectacle lens, can be reduced.

Brief description of the drawings

[FIG. 1] FIG. 1 is a schematic flow chart of a method for designing a spectacle lens according to one aspect of the present invention.
[FIG. 2] FIG. 2 is a view of an averaging filter patch (alternatively called a kernel, operator, or mask) applied to an approximate curvature map according to one aspect of the present invention, which is a view showing weighting values applied to the approximate curvature at the center of each square that constitutes an averaging filter, and is a view focusing on a center point (focus point) of a central square.
[FIG. 3] FIG. 3 is a view of a patch of a Gaussian filter applied to an approximate curvature map according to one aspect of the present invention, which is a view showing the weighting values applied to the approximate curvature at the center of each square that constitutes a Gaussian filter, and is a view focusing on the large point (focus point) at the center of a central square.
[FIG. 4] FIG. 4 is a schematic block diagram of a system for designing a spectacle lens according to one aspect of the present invention.
[FIG. 5A] FIG. 5A is an average power distribution view of a progressive refractive surface, according to Reference Example 1.
[FIG. 5B] FIG. 5B is an astigmatism distribution view of the progressive refractive surface, according to Reference Example 1.
[FIG. 5C] FIG. 5C is a high-order aberration distribution view of the progressive refractive surface, according to Reference Example 1.
[FIG. 6A] FIG. 6A is an average power distribution view of the progressive refractive surface, according to Example 1.
[FIG. 6B] FIG. 6B is an astigmatism distribution view of the progressive refractive surface, according to Example 1.
[FIG. 6C] FIG. 6C is a high-order aberration distribution view of the progressive refractive surface, according to Example 1.
[FIG. 7A] FIG. 7A is an average power distribution view of the progressive refractive surface after a redesign step, according to Example 1.

[FIG. 7B] FIG. 7B is an astigmatism distribution view of the progressive refractive surface after the redesign step, according to Example 1.

[FIG. 7C] FIG. 7C is a high-order aberration distribution view of the progressive refractive surface after the redesign step, according to Example 1.

[FIG. 8A] FIG. 8A is an average power distribution view of the progressive refractive surface, according to Example 2.

[FIG. 8B] FIG. 8B is an astigmatism distribution view of the progressive refractive surface, according to Example 2.

[FIG. 8C] FIG. 8C is a high-order aberration distribution view of the progressive refractive surface, according to Example 2.

[FIG. 9A] FIG. 9A is an average power distribution view of the progressive refractive surface after the redesign step, according to Example 2.

[FIG. 9B] FIG. 9B is an astigmatism distribution view of the progressive refractive surface after the redesign step, according to Example 2.

[FIG. 9C] FIG. 9C is a high-order aberration distribution view of the progressive refractive surface after the redesign step, according to Example 2.

[FIG. 10A] FIG. 10A is an average power distribution view of the progressive refractive surface, according to Example 3.

[FIG. 10B] FIG. 10B is an astigmatism distribution view of the progressive refractive surface, according to Example 3.

[FIG. 10C] FIG. 10C is a high-order aberration distribution view of the progressive refractive surface, according to Example 3.

[FIG. 11A] FIG. 11A is an average power distribution view of the progressive refractive surface after the redesign step, according to Example 3.

[FIG. 11B] FIG. 11B is an astigmatism distribution view of the progressive refractive surface after the redesign step, according to Example 3.

[FIG. 11C] FIG. 11C is a high-order aberration distribution view of the progressive refractive surface after the redesign step, according to Example 3.

Detailed description of the invention

Hereinafter, embodiments of the present invention will be described. The following description based on the drawings is merely illustrative, and the present invention is not limited to the illustrated embodiments. In this specification, the term "to" refers to a value greater than or equal to a given value and less than or equal to a given value.

<Definition>

The spectacle lens described in this specification has an object-side surface and an eyeball-side surface. The "object-side surface" refers to a surface that is located on the object side when spectacles equipped with spectacle lenses are worn by a wearer, and the "eyeball-side surface" refers to the opposite, that is, the surface that is located on the eyeball side when spectacles equipped with spectacle lenses are worn by a wearer. The object-side surface may be called an outer surface, and the eyeball-side surface may be called an inner surface.

In this specification, in the direction when facing the outer surface of a spectacle lens (hereinafter, when viewed in a plan view), a left-right direction is the x-direction, up-down direction is the y-direction, and a thickness direction of a spectacle lens, which is perpendicular to the x-direction and y-directions, is the z-direction. The z direction is also the optical axis direction of the spectacle lens. An origin is a lens center. The lens center refers to an optical center or a geometric center of the spectacle lens. In this specification, the optical center and the geometric center are approximately the same as each other.

The right direction (3 o'clock direction) is the +x direction, the left direction (9 o'clock direction) is the -x direction, the top direction (0 o'clock direction) is the +y direction, the bottom direction (6 o'clock direction) is the -y direction, the direction toward the object side is the +z direction, and the opposite direction (toward the back) is the -z direction.

The x direction is also called the x-axis, the y direction is also called the y-axis, and the z direction is also called the z-axis. The content of this paragraph can be rephrased as follows.

"When wearing the spectacle lens, the axis passing through the lens center from the object side toward the eyeball side is the z-axis, the axis from bottom to top and perpendicular to the z-axis is the y-axis, and the axis from left to right and perpendicular to the z-axis is the x-axis."

One aspect of the present invention shows, for example, a progressive power lens having a near portion for viewing an object at a near distance, a distance portion for viewing an object farther than the near distance, and an intermediate portion that progressively increases a refractive power between the two portions. Hereafter, the progressive power lens, that is, a spectacle lens, will be referred to simply as a "lens".

The near portion according to one aspect of the present invention has a refractive power for viewing an object at a near distance. The refractive power is a near vision power, which is the sum of a spherical refractive power S (distance vision power) and an addition power ADD. When the power is measured at least at the near vision power measurement reference point N, it is equal to or greater than the near vision power. The refractive power can be increased even after passing the near vision power measurement reference point N in a direction from the progression start point toward the near vision power measurement reference point N, and it does not matter if the near vision refractive power temporarily exceeds (so-called overshoot) the near vision power. According to one aspect of the present invention, a region having a refractive power of (near vision power -0.12D) or more is regarded as a near portion.

The distance portion according to one aspect of the present invention has a refractive power for viewing an object that is farther than a near distance. The refractive power is a spherical refractive power S (distance vision power). When the power is measured at least at the distance vision power measurement reference point F, it is equal to or less than the spherical refractive power S. In the distance portion according to one aspect of the present invention, the refractive power is approximately constant. According to one aspect of the present invention, a region having a refractive power within a range of (spherical refractive power $S\pm0.12D$) is regarded as a distance portion.

In the intermediate portion, the refractive power gradually changes. The difference between the refractive power for viewing a distant object and the refractive power for viewing a close object is called an addition power ADD (unit: D [diopter]; the same applies hereinafter to the refractive power and dioptric power described in this specification). In this specification, the "refractive power" may be used instead of the so-called diopter or power to generally indicate the degree of refraction of a lens.

In the intermediate portion, the refractive power changes continuously. The intermediate portion may be called a progressive zone. The length of the progression zone is defined as a distance between a progression start point where the change in refractive power begins and a progression end point where it ends.

The distance portion is a region of the progressive power lens that is located at and on the upper side of the progressive power start point. The near portion is a region of the progressive power lens that generally includes the progressive end point and below. The intermediate portion is a region between the distance portion and the near portion, and is a region in which the refractive power changes progressively.

For ease of explanation, for example, one aspect of the present shows a case in which the outer surface is a spherical or toric surface and the inner surface is a progressive surface (so-called inner surface progressive lens). Of course, this is just one example, and the outer surface may be a progressive surface. The progressive surface according to one aspect of the present invention has the following configuration.

On the inner surface of the lens according to one aspect of the present invention, a near vision region for viewing a near distance (eg, 40 cm to 60 cm) is located on the lower side (-y direction) of the lens in a wearing state of the lens.

On the other hand, according to one aspect of the present invention, the distance portion for visually recognizing an object at a distance farther than the near distance is located on the upper side of the near portion (in the +y direction). The distance portion according to one aspect of the present invention is not particularly limited, and may be the portion for a long distance (eg, 2 m to infinity) or for a medium distance (eg, 60 cm to 200 cm).

That is, the lens according to one aspect of the present invention may be an intermediate-near lens for an object distance from an intermediate distance (1 m to 40 cm) to a near distance (40 cm to 10 cm), or a near-near lens for an object distance within the near distance.

For convenience of explanation, one aspect of the present invention shows an example in which the distance portion is a portion for a long distance.

In the near portion, a near vision power measurement reference point is set for measuring a reference power. Similarly, in the distance portion as well, a distance vision power measurement reference point is set for measuring a reference power. The power here is a so-called spherical refractive power S. The power at the near vision power measurement reference point is (S+ADD (addition power)).

The "distance vision power measurement reference point" refers to a point at which the spherical refractive power and an astigmatism power described in the prescription data of wearer information are imparted to the progressive power lens. The spherical refractive power refers to a so-called spherical refractive power S (distance vision power S), and the cylindrical refractive power refers to a so-called astigmatism power C. The distance vision power measurement reference point (hereinafter simply referred to as a measurement reference point F or point F) is, for example, a point located on a meridian and 8.0 mm away from a horizontal line connecting the positions of two hidden marks, to the distance portion side.

The "eye point (EP)" is a position through which the line of sight passes when the wearer faces straight ahead while wearing the progressive power lens. Generally, it is placed at a position several mm below the measurement reference point F. The change of the refractive power occurs below this EP. The point where the change of the progressive power starts is also called a progression start point. In this embodiment, the geometric center GC, which is further below the EP, coincides with the progression start point and also coincides with a prism reference point.

The "near vision power measurement reference point" refers to the point where the addition power ADD is added to the spherical refractive power described in the prescription data of the wearer's information, and refers to the point where the spherical refractive power S+ADD is first realized when looking downward from the top of the lens. The near vision power measurement reference point (hereinafter, simply referred to as a measurement reference point N or point N) is also located on the meridian.

Incidentally, prescription data of the wearer's information is written on a lens bag of the progressive power lens. That is, by having the lens bag, the lens can be identified as a progressive power lens based on the prescription data of the wearer's information. The progressive power lens usually comes with the lens bag as a set. Therefore, the technical concept of the present invention is reflected in the progressive power lens attached with a lens bag, and is also reflected in the set of the progressive power lens and lens bag.

Further, the positions of the measurement reference point F, fitting point or eye point EP, and the measurement reference point N can be identified by referring to a remark chart or a centration chart issued by a lens manufacturer. The progression start point can also be identified by using a lens meter for measuring dioptric power.

The "main line of sight" is a trajectory line on a lens surface along which the line of sight moves when an object is viewed straight ahead in the near, distance and intermediate portions of a progressive power lens. The main line of sight is shifted toward a nose in the intermediate and near portions. The distance of this shift toward the nose is called an amount of inset.

The "meridian" refers to a vertical line that is perpendicular to a horizontal line connecting the positions of two hidden marks provided on the progressive power lens and that passes through a midpoint between the positions of the two hidden marks. The meridian corresponds to the y-axis on the distribution map shown in each figure of the present application.

<Method for designing a spectacle lens according to one aspect of the present invention>

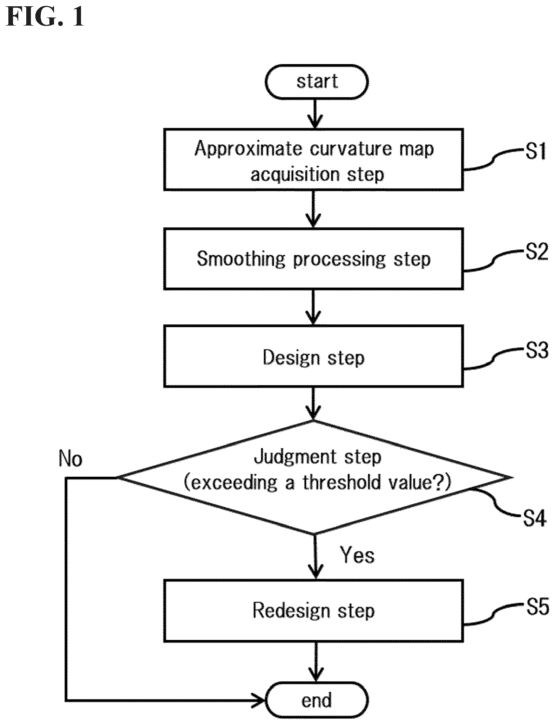

FIG. 1 is a schematic flow chart of a method for designing a spectacle lens according to one aspect of the present invention.

A method for designing a spectacle lens according to one aspect of the present invention includes at least the following steps.

    * An approximate curvature map acquisition step S1 of obtaining a distribution map of an approximate curvature $C_p$ on a xy plane coordinate system, at each point on a surface $\alpha$ that is a design surface (for example, at least one of the two surfaces, an inner surface in one aspect of the present invention).
    * A smoothing processing step S2 of performing smoothing filter processing to the distribution map.
    * A design step S3 of designing a new surface $\alpha'$ based on the distribution map of a new approximate curvature $C_p'$ obtained in the smoothing processing step.

The approximate curvature $C_p$ applied to the filter processing is defined as follows: the approximate curvature $C_p$ at an arbitrary point p(x, y, z) on the surface $\alpha$ is calculated by using the reciprocal of a radius of a circle that passes through three points p'(-x, -y, z) and (0, 0, 0) that are rotationally symmetric with respect to the point p in the xy plane perpendicular to the z axis, and when the point p is (0,0,0), an average of the two principal curvatures at the point p on the surface $\alpha$ is used as the approximate curvature $C_p$. The "two principal curvatures" refer to the largest and smallest of the curvatures.

The distribution map of the approximate curvature $C_p$ on the xy plane coordinate system may be referred to as an "approximate curvature map."

This approximate curvature map is a distribution map on the xy plane coordinate system, with a Cp value set as a third axis. To distinguish it from the z-axis described in the <Definition>, the third axis is called the s-axis. According to one aspect of the present invention, the s-axis, similarly to the z-axis, is a normal line on the xy plane, and the origin is a lens center.

The approximate curvature map may be obtained as a distribution map that can be specifically visually recognized, or may be obtained as a distribution map of data.

An already prepared map may be used as the approximate curvature map. The approximate curvature map acquisition step S1 may be performed to obtain the approximate curvature map that has already been obtained. Alternatively, when performing one aspect of the present invention, the approximate curvature may be calculated from the existing planar x, y and z coordinate values at each point. The approximate curvature map acquisition step S1 may be performed to calculate the approximate curvature from the x, y and z coordinate values at each point on the surface $\alpha$ before smoothing.

According to one aspect of the present invention, this approximate curvature map is subjected to a smoothing filter processing (smoothing processing step S2). There is no limit in a specific technique for the smoothing filter processing as long as it can smooth the approximate curvature map. Particularly, an image processing technique of reducing the sharpness of an image can be employed as one aspect of the present invention. Specific examples are given below.

The smoothing filter may be an averaging filter, which is known as one example of the image processing technique. Therefore, a detailed description will be omitted, but a brief description will be given below.

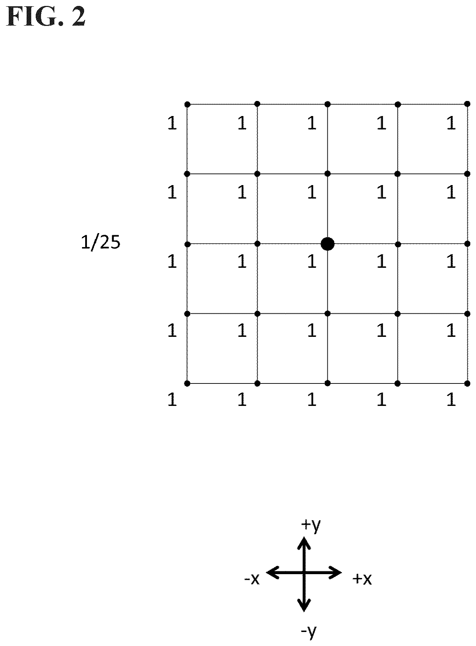

FIG. 2 is a view of an averaging filter patch (alternatively called a kernel, operator, or mask) applied to the approximate curvature map according to one aspect of the present invention, which is a view showing the weighting values applied to the approximate curvature at the center of each square that constitutes an averaging filter, and is a view focusing on a center point (focus point) of a central square. According to one aspect of the invention, this "point" refers to a coordinate position on the xy plane of the inner surface of the lens.

The averaging filter is also called a moving average filter. According to one aspect of the present invention, the averaging filter may be configured to average the approximate curvatures at the focus points and the center points of the surrounding squares, according to the number of the points applied to the averaging filter, and this averaged value may be used as the approximate curvature at each point.

This approximate curvature makes this technique applicable, whereas for example the z coordinate value that indicates the height of a lens makes it inapplicable. This is because if an averaging filter is applied to the lens height, each coordinate value will become the same value, resulting in a flat surface. Particularly, if the averaging filter is used at an origin, $z \neq 0$ occurs, resulting in a shift from the origin. On the other hand, according to one aspect of the present invention, due to use of the approximate curvature, even when the approximate curvature at each point in the xy coordinate system becomes close to an averaged value due to averaging, it is still a curved surface having a curvature, and even when averaging filter processing is performed at the origin, z=0 can be obtained, so there is no problem with subsequent calculations.

According to one aspect of the present invention, a Gaussian filter, which will be described later, can also be used in addition to the averaging filter. A remarkable effect of one aspect of the present invention is that the smoothing filter is highly versatile.

The smoothing filter may be a Gaussian filter. The Gaussian filter is known as an example of an image processing technique, and therefore a detailed description will be omitted, but a brief description will be given below.

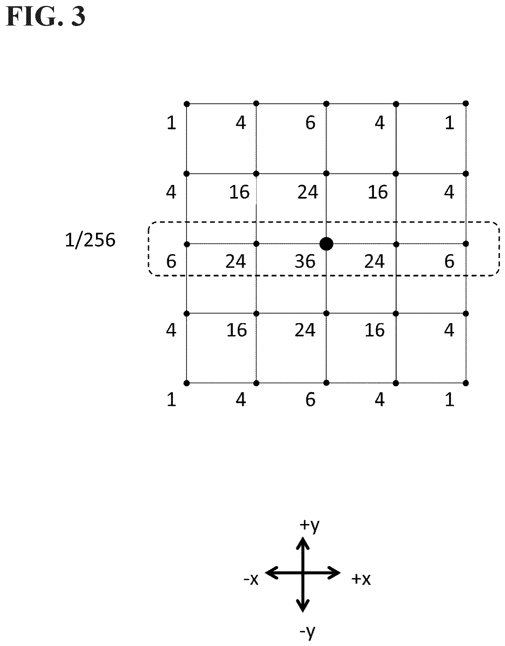

FIG. 3 is a view of a patch of the Gaussian filter applied to an approximate curvature map according to one aspect of the present invention, which is a view showing the weighting values applied to the approximate curvature at the center of each square that constitutes the Gaussian filter, and is a view focusing on a large point (focus point) at the center of the central square.

In the progressive power lens, the continuity of the surface (the absence of steps) is maintained. Therefore, the approximate curvature at a focus point and the approximate curvature at a point closest to the focus point are close to each other. On the other hand, the approximate curvature at a point farther away from the focus point is a value that is far from the approximate curvature at the focus point. This tendency becomes more remarkable the farther the point is from the focus point.

Therefore, the Gaussian filter is used for calculation using a Gaussian distribution function so as to decrease the weighting at a point farther away from the focus point while increasing the weighting at a point closer to the focus point, when calculating the average value.

In FIG. 3, the greater the number of squares arranged, the greater the smoothing effect. In addition, the larger the size of the Gaussian filter, the greater the smoothing effect.

There is no limit in the dimension of the Gaussian filter, but the width of the smoothing filter should be larger than a narrowest width between the peaks of third-order aberration on both the left and right sides of the principal meridian in the progressive power lens before smoothing.

As for the dimension of the Gaussian filter, for example, a square is used for the figure constituting the patch in FIG. 3, but a rectangle may be used, or any other shape may be used. In fact, the patch may be formed by a line shape as shown by dashed line in FIG. 3, instead of a shape having an area. In this case, it is preferable that the Gaussian filter is long in the x-axis direction, because the refractive power of the progressive power lens changes in the y-axis direction.

That is, the Gaussian filter is long in the x-axis direction, which means that the patch in the y-axis direction is smaller than in the x-axis direction. The small size of the patch in the y-axis direction means that the approximate curvature is not averaged or is averaged only slightly in the y-axis direction. This means that the refractive power that changes in the y-axis direction does not change even when the Gaussian filter processing is performed.

As a result, a precisely controlled addition profile can be maintained and a progressive zone length can be maintained. The "addition profile" referred to here is the relationship between a distance along a main line of sight and an addition power.

The effect of making the width of the Gaussian patch different in the x-axis direction and the y-axis direction will be shown in the Examples section below, but it can also be understood from the high-order aberration distribution view of the progressive power lens.

For example, when the Gaussian filter is long in the x-axis direction (more specifically, when it is a linear Gaussian patch in the x-axis direction), the high-order aberration in the near portion is significantly reduced. When the Gaussian filter is long in the y-axis direction (more specifically, when it is a linear Gaussian patch in the y-axis direction), the high-order aberration on the lateral side of the distance portion is reduced.

A specific example of the dimension of the smoothing filter is as follows: the lower limit of the dimension of the smoothing filter in one direction is, for example, 3 mm, 4 mm, 5 mm, or 6 mm. The upper limit may be, for example, 30 mm, 20 mm, 15 mm, or 10 mm. There is also no limit in the number of patches that constitute the smoothing filter, but as a specific example, there may be 3 to 10 in the x-axis direction and 3 to 10 in the y-axis direction, and the number of points in the x-axis direction and the number of points in the y-axis direction may be the same or different.

According to one aspect of the present invention, the design step S3 is performed to design a new surface $\alpha'$ based on the distribution map of the new approximate curvature $C_p'$ obtained in the smoothing processing step. There is no limit in the specific technique of designing the surface $\alpha'$ from the distribution map of the approximate curvature $C_p'$, and based on the definition of the approximate curvature described above, the surface $\alpha'$ may be constructed by calculating the z coordinate value backwards from the xy coordinates and the approximate curvature $C_p'$ at those coordinates. Thus, the surface $\alpha'$ having this z coordinate value is designed. Between each of the coordinate values (each of the points), the curved surface may be interpolated by a known method (for example, spline interpolation). When the refractive index of a base material used as a lens base material is a known index, the refractive power at a given location on the surface $\alpha'$ can also be determined.

Although one aspect of the present invention shows a case where the design surface $\alpha$ is an inner progressive surface, the present invention is not limited to this example. For example, the design surface $\alpha$ does not have to be a single specific surface, but a virtual surface having a power distribution and an astigmatism distribution when the object-side surface and the eyeball-side surface are combined, may be used as the design surface $\alpha$ (this content is employed in the Example given later). Then, after the new surface $\alpha'$ is designed in the design step, the contribution of the surface $\alpha'$ to the power distribution and the astigmatism distribution may be shared between the object-side surface and the eyeball-side surface.

Hereinafter, an example will be given to show a further useful aspect of the present invention. It is preferable that the method for designing a spectacle lens according to one aspect of the present invention further includes the following steps.

* Judgement step S4 of judging at least either one (preferably both Judgment 1 and Judgment 2) of whether or not a difference between an addition power on the surface $\alpha'$ designed in the design step and an addition power on the surface $\alpha$ before the smoothing processing step exceeds a threshold value (judgment 1), or

whether or not a difference between a curvature of the distance portion on the surface $\alpha'$ designed in the design step and a curvature of the distance portion on the surface $\alpha$ before the smoothing processing step exceeds a threshold value (judgment 2),

and

* redesign step S5 of obtaining, when it is judged in the judgment step that the threshold value is exceeded, a new z-coordinate value $z_p(x, y)$ at each point using the following formula, to design a surface $\alpha''$ having the z-coordinate value $z_p$ at each point,

[Formula 2]

$$z_p(x,y) = \frac{\left(\dfrac{(c_p(x,y) - c_{fa}) * (c_{nb} - c_{fb})}{c_{na} - c_{fa}} + c_{fb}\right) * (x^2 + y^2)}{1 + \sqrt{1 - \left(\dfrac{(c_p(x,y) - c_{fa}) * (c_{nb} - c_{fb})}{c_{na} - c_{fa}} + c_{fb}\right)^2 * (x^2 + y^2)}}$$

wherein $C_{fb}$ is a curvature of the distance portion before the smoothing processing step, $C_{nb}$ is a curvature of the near portion before the smoothing processing step, $C_{fa}$ is a curvature of the distance portion after the smoothing processing step, and $C_{na}$ is a curvature of the near portion after the smoothing processing step.

The curvature of the distance portion may be rephrased as a distance vision power or spherical refractive power S measured at the distance vision power measurement reference point F.

Due to the need for performing smoothing filter processing, the addition power on the surface $\alpha'$ designed in the design step often differs from the addition power on the surface $\alpha$ before the smoothing processing. The same applies to the curvature of the distance portion. The judgment step S4 is to judge whether or not the difference between the surface $\alpha$ and the surface $\alpha'$ is large.

Whether or not this difference is large may be judged based on whether or not the difference exceeds a threshold value. The threshold value for both judgment 1 and judgment 2 may be, for example, 0.25D (preferably, 0.12D, 0.10D, 0.08D, 0.05D, 0.03D, or 0.01D).

When the difference between surfaces $\alpha$ and $\alpha'$ is large, it is preferable to reduce the difference. The specific technique for reducing the difference is defined in the redesign step S5.

According to one aspect of the present invention, the difference in the addition power and/or the curvature of the distance portion between the surfaces $\alpha$ and $\alpha'$ can be reduced to a threshold value or less (or eliminated in some cases) simply by performing the redesign step. This is because according to one aspect of the present invention, the smoothing filter processing, which is usually used in image processing, is applied to the distribution map of the approximate curvature $C_p$ (approximate curvature map) based on the concept of the approximate curvature $C_p$. This preferable example also contributes greatly to reduction of the time required to perform smoothing filter processing to a spectacle lens, which is the effect of the present invention.

According to one example of the present invention, the time required to perform smoothing filter processing to a spectacle lens, can be reduced.

<Modified example, etc.>

One aspect of the present invention has been described above, and the above disclosure shows an exemplary aspect of the present invention. That is, the technical scope of the present invention is not limited to the exemplary aspect described above, and various modifications are possible without departing from the gist of the present invention. Further, the above-described disclosure contents can be arbitrarily selected and combined with the following modified examples.

For example, the present invention can also be applied to a single focal lens. When both the object-side surface and the eyeball-side surface are perfectly spherical, it is acceptable to employ a curvature that is not an approximate value such as the approximate curvature described below. On the other hand, even in the case of the single focal lens, an aspheric design may be employed in a peripheral area farther away from the lens center to reduce a refractive power error or astigmatism in the peripheral area. In such a case, the effect of one aspect of the present invention becomes remarkable, as in the case of the progressive power lens.

As an example of the spectacle lens according to one aspect of the present invention, the distance portion for visually recognizing an object that is farther than the near distance has been given. On the other hand, the distance portion may not be a portion intended for stably viewing the object farther than the near distance, but may simply make it possible to view the object farther than the near distance.

The distance portion in the spectacle lens according to one aspect of the present invention may be a narrow portion. For example, the lens may be a progressive power lens having a configuration in which the refractive power progresses not only downward from the progression start point but also upward (in most cases, the refractive power decreases toward the upper side). In this case, a distance vision power measurement reference point is provided on the progressive power lens, but this is merely a reference point for checking whether or not a refractive power for a specified distance is secured, and a wide distance portion is not required. An example of such a spectacle lens is the product name Lecture (registered trademark) TF.

The technical concept of the present invention is also reflected in the method for manufacturing a spectacle lens, in which a lens base material is processed so as to realize a surface designed by the method for designing a spectacle lens according to one aspect of the present invention.

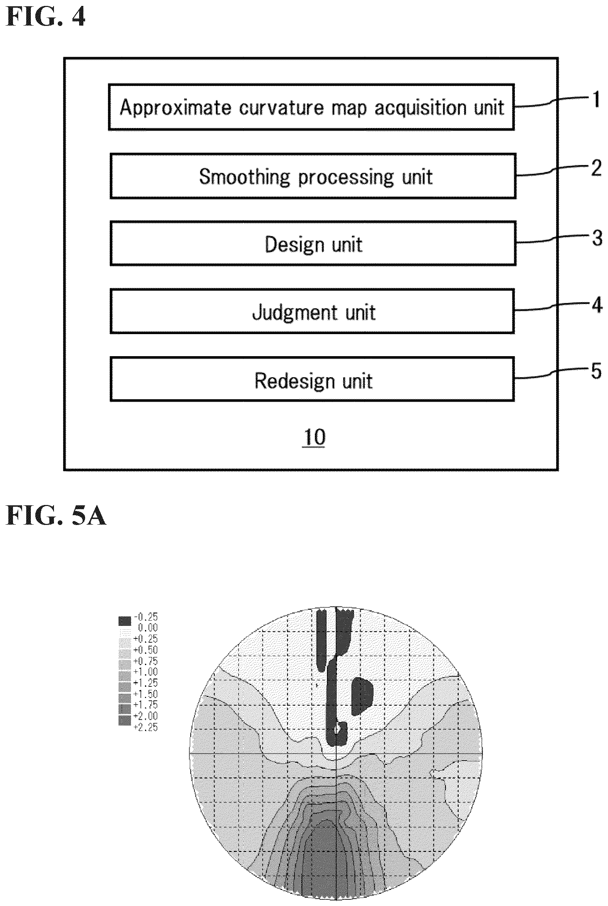

FIG. 4 is a schematic block diagram of a system for designing a spectacle lens according to one aspect of the present invention.

The technical concept of the present invention can also be applied to a system for designing a spectacle lens. An example of the configuration is as follows.

"A system for designing a spectacle lens, which is a system 10 for designing a spectacle lens having an object-side surface and an eyeball-side surface, the system including:

an approximate curvature map acquisition unit 1 that obtains a distribution map of an approximate curvature $C_p$ on an xy plane coordinate system, at each point on a surface $\alpha$, which is a design surface;
a smoothing processing unit 2 that performs smoothing filter processing to the distribution map; and
a design unit 3 that designs a new surface $\alpha'$ based on the distribution map of a new approximate curvature $C_p'$ obtained by the smoothing processing unit 2.

The content performed by the smoothing processing unit 2 is the same as that of the above-described content of the smoothing processing step, and therefore will not be described here. The content performed by the design unit 3 is the same as that of the above-described content of the design step, and therefore the description thereof will be omitted. The calculation unit in the computer may perform the roles of the smoothing processing unit 2 and the design unit 3 (as well as the judgment unit 4 and redesign unit 5 described below), or a control computer unit including the calculation unit may perform these roles.

The control computer unit functions as a computer device that performs information processing instructed by a specified program, and is specifically composed of a combination of a CPU (Central Processing Unit), HDD (Hard disk drive), ROM (Read Only Memory), RAM (Random Access Memory), external interface (I/F), etc.

The system for designing a spectacle lens according to one aspect of the present invention preferably also includes the following configuration.

* A judgment unit 4 that judges at least either one of whether or not a difference between an addition power on a surface $\alpha'$ designed by the design unit 3 and an addition power on the surface $\alpha$ before the smoothing processing filter processing exceeds a threshold value or whether or not a difference between a curvature of a distance portion on the surface $\alpha'$ designed by the design unit and a curvature of a distance portion on the surface $\alpha$ before the smoothing processing filter processing exceeds a threshold value; and

* a redesign unit 5 that, when it is judged by the judgment unit 4 that the threshold value is exceeded, obtains a new z coordinate value $z_p(x, y)$ at each point using the above formula, and designs a surface $\alpha''$ having the z coordinate value $z_p$ at each point.

The technical concept of the present invention can also be applied to a program for the system 10 for designing a spectacle lens. An example of the configuration is as follows.

"A program for the system 10 for designing a spectacle lens having an object-side surface and an eyeball-side surface, the program causing a computer to function as:

an approximate curvature map acquisition unit 1 that obtains a distribution map of an approximate curvature $C_p$ on an xy plane coordinate system, at each point on a surface $\alpha$, which is a design surface;

a smoothing processing unit 2 that performs smoothing filter processing to the distribution map; and

a design unit 3 that designs a new surface $\alpha'$ based on the distribution map of the new approximate curvature $C_p'$ obtained by the smoothing processing unit 2.

The program for the system 10 for designing a spectacle lens according to one aspect of the present invention preferably causes a computer to function as the judgment unit 4 and the redesign unit 5 described above.

Examples

The present invention will be specifically described below using examples, but the present invention is not limited to the following examples in any way.

<Reference Example 1>

As a target for being subjected to smoothing according to one aspect of the present invention, a progressive refractive surface was prepared as a design surface rather than a specific outer or inner surface. This progressive refractive surface corresponds to an original progressive refractive surface described in WO97/019382. The technique described in this publication may be employed as a specific method for applying this original progressive refractive surface to the lens surface.

FIG. 5A is an average power distribution view of a progressive refractive surface, according to Reference Example 1.

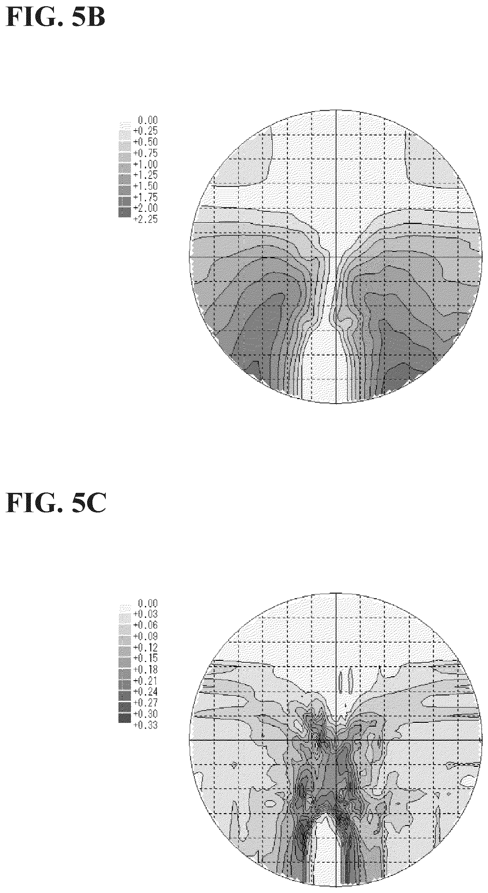

FIG. 5B is an astigmatism distribution view of the progressive refractive surface, according to Reference Example 1.

FIG. 5C is a high-order aberration distribution view of the progressive refractive surface, according to Reference Example 1.

The pitch in the average power distribution view and an astigmatism distribution view described below is 0.25D, and the pitch in the high-order aberration distribution view is 0.03D.

In the progressive refractive surface according to Reference Example 1, the spherical refractive power S was 0 D, the astigmatism power C was 0 D, and the addition power ADD was 2.00 D. An approximate curvature map of the progressive refractive surface was also obtained.

<Example 1>

Based on the method for designing a spectacle lens described as one aspect of the present invention, the approximate curvature map acquisition step S1 was performed to obtain an approximate curvature map of the progressive refractive surface of Reference Example 1 from the xyz coordinate values on the progressive refractive surface. Then, the smoothing processing step S2 was performed to the approximate curvature map by processing it with a Gaussian filter. A patch structure was employed for the Gaussian filter, in which five points were aligned in the x-axis direction and five points were aligned in the y-axis direction. The central point of this patch was set as a focus point (calculation point). The dimension of the Gaussian patch was 6 mm square. Then, the above design step S3 was performed using the smoothed approximate curvature map.

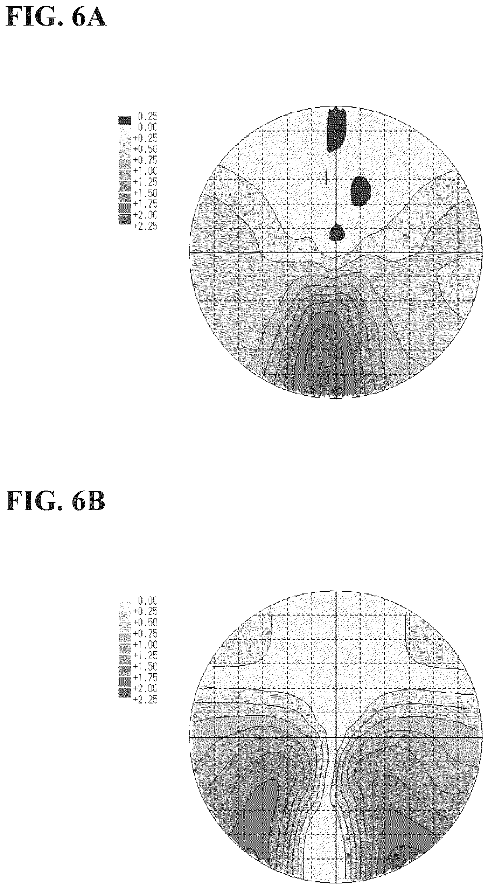

FIG. 6A is an average power distribution view of the progressive refractive surface, according to Example 1.

FIG. 6B is an astigmatism distribution view of the progressive refractive surface, according to Example 1.

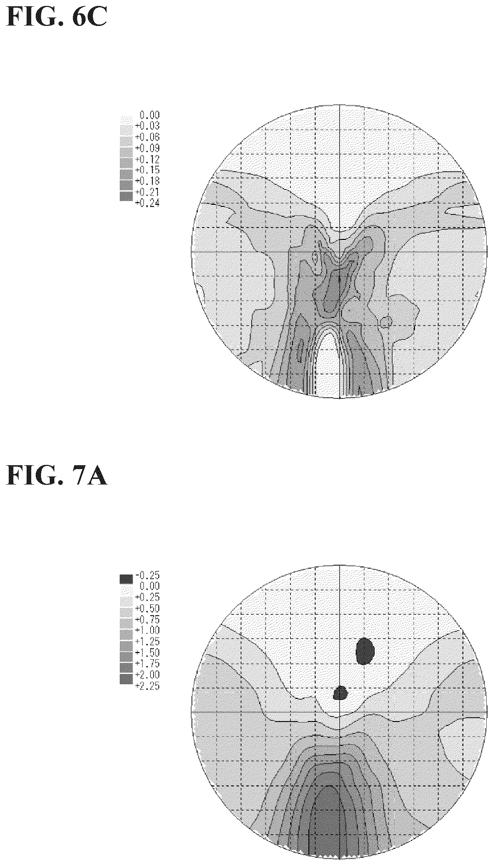

FIG. 6C is a high-order aberration distribution view of the progressive refractive surface, according to Example 1.

The average power distribution view and the astigmatism distribution view reveal that the contour lines are smoothed from Reference Example 1 to this example. This is more remarkable in the high-order aberration distribution view. This effect also applies to the examples described below.

In the case of the technique described in Patent Document 1, even when underestimating the time, several minutes are required. On the other hand, in the case of the technique of this example, only a few seconds are required. In other words, by employing this example, the time can be reduced to 1/60, even by simple calculation. This effect also applies to the examples described below.

After the smoothing processing step and the design step were performed as described above, the judgment step S4 described in one aspect of the present invention was performed.

As a result, the difference between the addition power on the surface $\alpha'$ and the addition power on the surface $\alpha$ before the smoothing processing exceeded a threshold value (0.01D, the same applies below), and the difference between the curvature of the distance portion on the surface $\alpha'$ and the curvature of the distance portion on the surface $\alpha$ before the smoothing processing exceeded a threshold value (0.01 D, the same applies below).

Therefore, the redesign step S5 was performed to obtain a new z coordinate value $z_p$ (x, y) at each point using the above formula described in one aspect of the present invention, and design a surface $\alpha''$ having the z coordinate value $z_p$ at each point.

FIG. 7A is an average power distribution view of the progressive refractive surface after a redesign step, according to Example 1.

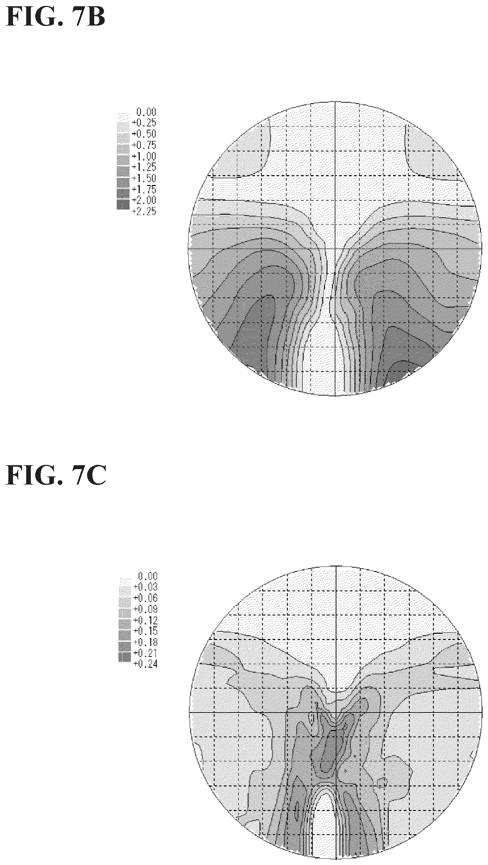

FIG. 7B is an astigmatism distribution view of the progressive refractive surface after the redesign step, according to Example 1.

FIG. 7C is a high-order aberration distribution view of the progressive refractive surface after the redesign step, according to Example 1.

It is found that, in the average power distribution view, astigmatism distribution view, and higher-order aberration distribution view, even after the redesign step, the smooth state of the contour lines is maintained and the design as a progressive surface is maintained without causing any failure. This is due to the use of the approximate curvature. In other words, this means that the parameter of the approximate curvature enables to perform the redesign step without fear of causing a failure in the design of the spectacle lens. This effect also applies to the examples described below.

<Example 2>

In this example, the dimension of the Gaussian patch in Example 1 was changed from 6 mm square to 10 mm square. Other than that, this example was performed in the same manner as Example 1.

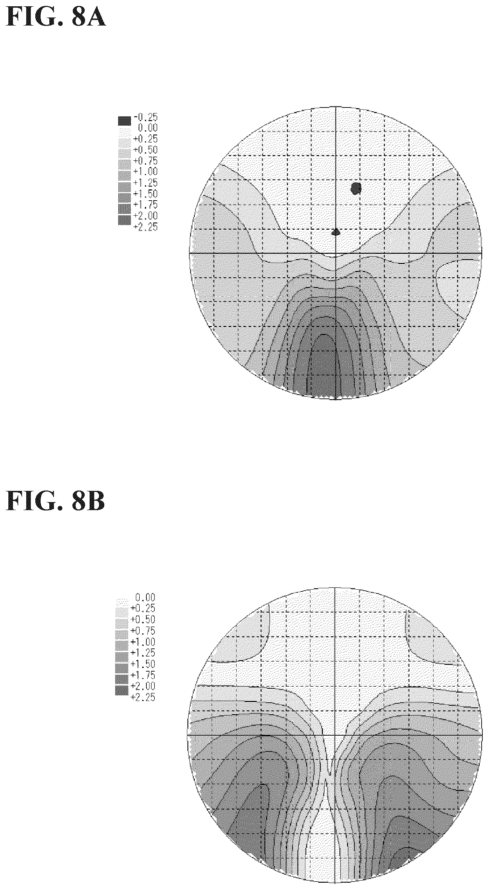

FIG. 8A is an average power distribution view of the progressive refractive surface, according to Example 2.

FIG. 8B is an astigmatism distribution view of the progressive refractive surface, according to Example 2.

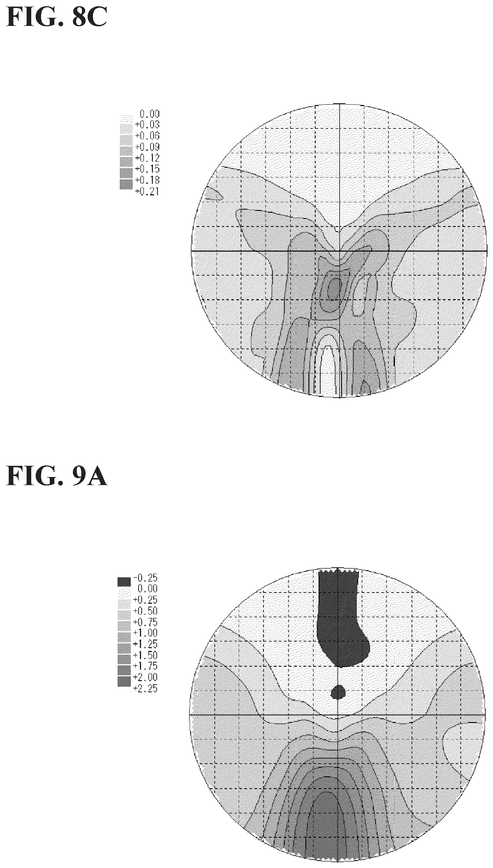

FIG. 8C is a high-order aberration distribution view of the progressive refractive surface, according to Example 2.

In the average power distribution view, the astigmatism distribution view, and the higher-order aberration distribution view, it is found that the contour lines are smoother in this Example than in the Example 1.

After the smoothing processing step and the design step were performed as described above, the judgment step described in one aspect of the present invention was performed.

As a result, the difference between the addition power on the surface $\alpha'$ and the addition power on the surface $\alpha$ before the smoothing processing step exceeded a threshold value, and the difference between the curvature of the distance portion on surface $\alpha'$ and the curvature of the distance portion on surface $\alpha$ before the smoothing processing step exceeded a threshold value.

Therefore, the redesign step was performed to obtain a new z coordinate value $z_p$ (x, y) at each point using the above formula described in one aspect of the present invention, and to design a surface $\alpha''$ having the z coordinate value $z_p$ at each point.

FIG. 9A is an average power distribution view on the progressive refractive surface after the redesign step, according to Example 2.

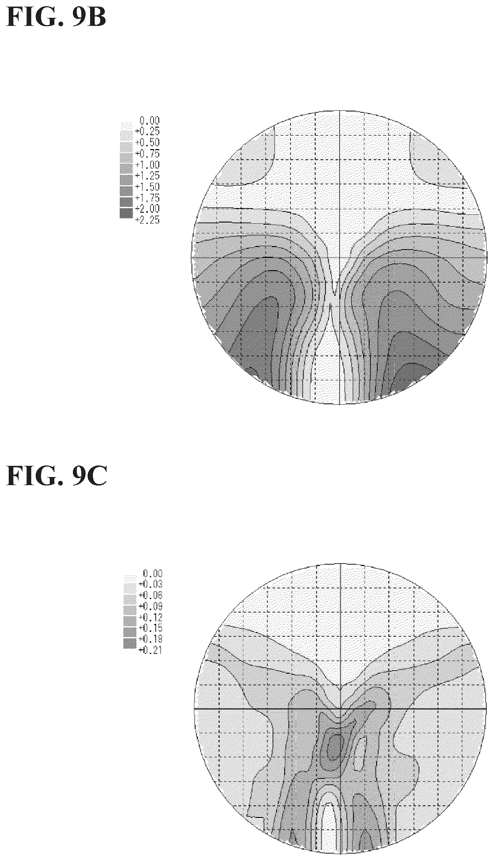

FIG. 9B is an astigmatism distribution view of the progressive refractive surface after the redesign step, according to Example 2.

FIG. 9C is a high-order aberration distribution view of the progressive refractive surface after the redesign step, according to Example 2.

It is found that, in the average power distribution view, astigmatism distribution view, and higher-order aberration distribution view, even after the redesign step, the smooth state of the contour lines is maintained and the design as a progressive surface is maintained without causing any failure.

<Example 3>

In this example, the Gaussian patch in Example 1 was changed from a planar patch to a linear patch. Specifically, the dimension of the Gaussian patch was changed from 6 mm square to a long 10 mm line in the x-axis direction (passing through the focus point at the center). Other than that, this example was performed in the same manner as in Example 1.

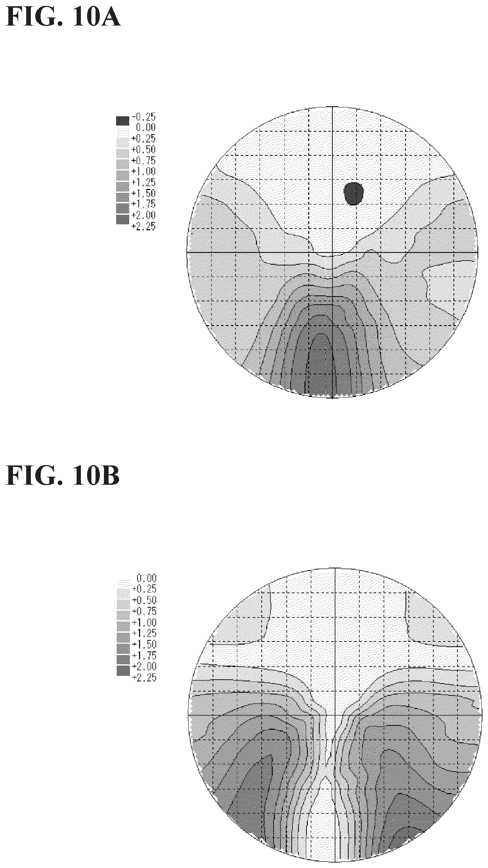

FIG. 10A is an average power distribution view of the progressive refractive surface, according to Example 3.

FIG. 10B is an astigmatism distribution view of the progressive refractive surface, according to Example 3.

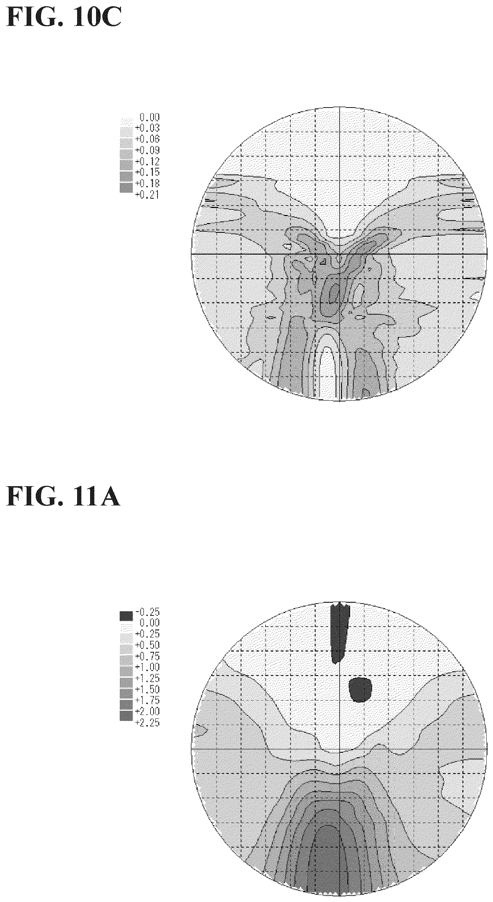

FIG. 10C is a high-order aberration distribution view of the progressive refractive surface, according to Example 3.

It is found that, in the average power distribution view, the astigmatism distribution view, and the high-order aberration distribution view, smoothing is more achieved than in Reference Example 1. It is also found that, in this example, at least in the average power distribution view and the astigmatism distribution view, smoothing is achieved to an equal extent compared to Example 1. It is found that, in the high-order aberration distribution view, smoothing is achieved at least in the near portion at a lower side, to an equal extent compared to Example 1.

After the smoothing processing step and the design step were performed as described above, the judgment step described in one aspect of the present invention was performed.

As a result, the difference between the addition power on the surface $\alpha'$ and the addition power on the surface $\alpha$ before the smoothing processing step exceeded a threshold value, and the difference between the curvature of the distance portion on the surface $\alpha'$ and the curvature of the distance portion on the surface $\alpha$ before the smoothing processing step exceeded a threshold value.

Therefore, the redesign step was performed to obtain a new z coordinate value $z_p$ (x, y) at each point using the above formula given in one aspect of the present invention, and design a surface $\alpha''$ having the z coordinate value $z_p$ at each point.

FIG. 11A is an average power distribution view of the progressive refractive surface after the redesign step, according to Example 3.

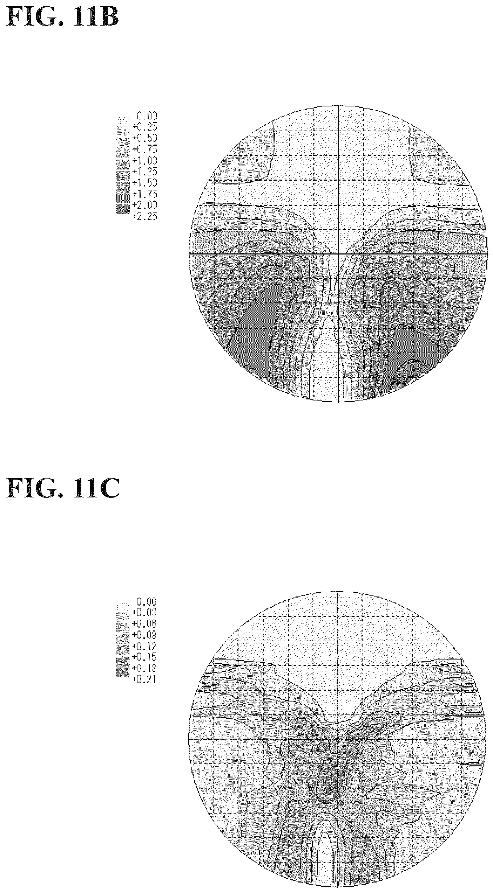

FIG. 11B is an astigmatism distribution view of the progressive refractive surface after the redesign step, according to Example 3.

FIG. 11C is a high-order aberration distribution view of the progressive refractive surface after the redesign step, according to Example 3.

It is found that, in the average power distribution view, astigmatism distribution view, and higher-order aberration distribution view, even after the redesign step, the smooth state of the contour lines is maintained and the design as a progressive surface is maintained without causing any failure.

Description of signs and numerals

10    System for designing spectacle lens
1    Approximate curvature map acquisition unit
2    Smoothing processing unit
3    Design unit
4    Judgment unit
5    Redesign unit

**Claims**

1.  A method for designing a spectacle lens having an object-side surface and an eyeball-side surface, the method comprising:

    obtaining a distribution map of approximate curvature $C_p$ at each point on a surface $\alpha$, which is a design surface, on an xy plane coordinate system;
    performing smoothing filter processing to the distribution map; and

designing a new surface $\alpha'$ based on the distribution map of a new approximate curvature $C_p'$ obtained by the smoothing filter processing,

wherein when wearing the spectacle lens, an axis passing through a lens center from an object side toward an eyeball side is z-axis, an axis perpendicular to the z-axis from bottom to top is y-axis, and an axis perpendicular to the z-axis from left to right is x-axis, and

the approximate curvature $C_p$ applied to the filter processing is defined as follows:

the approximate curvature $C_p$ at an arbitrary point p (x, y, z) on the surface $\alpha$ is calculated by using a reciprocal of a radius of a circle that passes through three points p' (-x, -y, z) and (0, 0, 0) that are rotationally symmetric with respect to the point p in a xy plane perpendicular to the z axis, and when the point p is (0,0,0), an average of two principal curvatures at the point p on the surface $\alpha$ is used as the approximate curvature $C_p$.

2. The method for designing a spectacle lens according to claim 1, wherein the spectacle lens is a progressive power lens having a near portion for viewing an object at a near distance, a distance portion for viewing an object at a distance farther than the near distance, and an intermediate portion for progressively increasing a refractive power between the near and distance portions.

3. The method for designing a spectacle lens according to claim 1 or 2, wherein the smoothing filter is a Gaussian filter.

4. The method for designing a spectacle lens according to claim 3, wherein the Gaussian filter is long in x-axis direction.

5. The method for designing a spectacle lens according to claim 1 or 2, wherein the smoothing filter is an averaging filter.

6. The method for designing a spectacle lens according to claim 1,

wherein the spectacle lens is a progressive power lens having a near portion for viewing an object at a near distance, a distance portion for viewing an object farther than the near distance, and an intermediate portion for progressively increasing a refractive power between the near portion and the distance portion;

the near portion is a region having a refractive power of (spherical power S + addition power ADD - 0.12D) or more;

the distance portion is a portion for visually recognizing an object farther than a near distance and is a region having a refractive power within a range of (spherical power S ± 0.12D);

the method comprising:

judging at least either one of whether or not a difference between an addition power on a surface $\alpha'$ designed in the designing and an addition power on a surface $\alpha$ before the smoothing processing exceeds a threshold value or whether or not a difference between a curvature of the distance portion on the surface $\alpha'$ designed in the designing and a curvature of the distance portion on the surface $\alpha$ before the smoothing processing exceeds a threshold value,

wherein when it is judged to be different in the judging, a new z coordinate value $z_p$ (x, y) is obtained at each point using the following formula, and a redesign step is performed to design a surface $\alpha''$ having the z coordinate value $z_p$ at each point.

［Ｆｏｒｍｕｌａ　１］

$$z_p(x,y) = \frac{\left( \frac{(c_p(x,y) - c_{fa}) * (c_{nb} - c_{fb})}{c_{na} - c_{fa}} + c_{fb} \right) * (x^2 + y^2)}{1 + \sqrt{1 - \left( \frac{(c_p(x,y) - c_{fa}) * (c_{nb} - c_{fb})}{c_{na} - c_{fa}} + c_{fb} \right)^2 * (x^2 + y^2)}}$$

wherein $C_{fb}$ is a curvature of the distance portion before the smoothing processing, and $C_{nb}$ is a curvature of the near portion before the smoothing processing, $C_{fa}$ is a curvature of the distance portion after the smoothing processing, and $C_{na}$ is a curvature of the near portion after the smoothing processing.

7. A method for manufacturing a spectacle lens, the method comprising processing a lens base material so as to realize a surface designed by the method for designing the spectacle lens according to claim 1 or 2.

8. A system for designing a spectacle lens having an object-side surface and an eyeball-side surface, the system comprising:

an approximate curvature map acquisition unit that obtains a distribution map of an approximate curvature $C_p$ on an xy plane coordinate system, at each point on a surface $\alpha$ that is a design surface;
a smoothing processing unit that performs smoothing filter processing to the distribution map; and
a design unit that designs a new surface $\alpha'$ based on a distribution map of a new approximate curvature $C_p'$ obtained by the smoothing processing unit.

9. The system for designing a spectacle lens according to claim 8, the system comprising:

a judgment unit that judges at least either one of whether or not a difference between an addition power on a surface $\alpha'$ designed by the design unit and an addition power on a surface $\alpha$ before the smoothing processing filter processing exceeds a threshold value or whether or not a difference between a curvature of a distance portion on the surface $\alpha'$ designed by the design unit and a curvature of a distance portion on a surface $\alpha$ before the filter processing exceeds a threshold value; and
a redesign unit that, when it is judged by the judgment unit that the threshold value is exceeded, obtains a new z coordinate value $z_p$ (x, y) at each point using the above formula, and designs a surface $\alpha''$ having the z coordinate value $z_p$ at each point.

10. A program for a system for designing a spectacle lens having an object-side surface and an eyeball-side surface, the program causing a computer to function as:

an approximate curvature map acquisition unit that obtains a distribution map of an approximate curvature $C_p$ on a xy plane coordinate system, at each point on a surface $\alpha$, which is a design surface;
a smoothing processing unit that performs smoothing filter processing to the distribution map; and
a design unit that designs a new surface $\alpha'$ based on a distribution map of a new approximate curvature $C_p'$ obtained by the smoothing processing unit.

11. The program for the system for designing the spectacle lens according to claim 10, the system causing a computer to function as:

a judgment unit that judges at least either one of whether or not a difference between an addition power on a surface $\alpha'$ designed by the design unit and an addition power on a surface $\alpha$ before the smoothing filter processing exceeds a threshold value or whether or not a difference between a curvature of a distance portion on a surface $\alpha'$ designed by the design unit and a curvature of a distance portion on the surface $\alpha$ before the smoothing processing filter processing exceeds a threshold value; and
a redesign unit that, when it is judged by the judgment unit that the threshold value is exceeded, obtains a new z coordinate value $z_p$ (x, y) at each point using the above formula, and designs a surface $\alpha''$ having the z coordinate value $z_p$ at each point.

**FIG. 1**

```
                    ( start )
                        │
                        ▼
        ┌───────────────────────────────┐
        │   Approximate curvature map    │─── S1
        │      acquisition step          │
        └───────────────────────────────┘
                        │
                        ▼
        ┌───────────────────────────────┐
        │   Smoothing processing step    │─── S2
        └───────────────────────────────┘
                        │
                        ▼
        ┌───────────────────────────────┐
        │         Design step            │─── S3
        └───────────────────────────────┘
                        │
                        ▼
    No                ◇◇◇◇◇◇◇◇◇◇◇◇◇◇◇◇◇◇◇
    ┌──────────────◇  Judgment step       ◇
    │              ◇ (exceeding a threshold value?) ◇─── S4
    │                ◇◇◇◇◇◇◇◇◇◇◇◇◇◇◇◇◇◇◇
    │                        │ Yes
    │                        ▼
    │        ┌───────────────────────────────┐
    │        │        Redesign step           │─── S5
    │        └───────────────────────────────┘
    │                        │
    │                        ▼
    └──────────────────►  ( end )
```

**FIG. 2**

# FIG. 3

| 1 | 4 | 6 | 4 | 1 |
| 4 | 16 | 24 | 16 | 4 |
| 6 | 24 | 36 | 24 | 6 |
| 4 | 16 | 24 | 16 | 4 |
| 1 | 4 | 6 | 4 | 1 |

1/256

+y

−x        +x

−y

## FIG. 4

| | |
|---|---|
| Approximate curvature map acquisition unit | 1 |
| Smoothing processing unit | 2 |
| Design unit | 3 |
| Judgment unit | 4 |
| Redesign unit | 5 |

<u>10</u>

## FIG. 5A

**FIG. 5B**

**FIG. 5C**

**FIG. 6A**

**FIG. 6B**

**FIG. 6C**

**FIG. 7A**

**FIG. 7B**

**FIG. 7C**

**FIG. 8A**

**FIG. 8B**

## FIG. 8C

## FIG. 9A

**FIG. 9B**

**FIG. 9C**

# FIG. 10A

# FIG. 10B

**FIG. 10C**

**FIG. 11A**

# FIG. 11B

# FIG. 11C

## INTERNATIONAL SEARCH REPORT

| International application No. |
| --- |
| **PCT/JP2023/041189** |

| A. CLASSIFICATION OF SUBJECT MATTER |
| --- |
| *G02C 7/02*(2006.01)i; *G02C 7/06*(2006.01)i<br>FI:  G02C7/02; G02C7/06 |
| According to International Patent Classification (IPC) or to both national classification and IPC |

| B. FIELDS SEARCHED |
| --- |
| Minimum documentation searched (classification system followed by classification symbols)<br>G02C7/02; G02C7/06 |
| Documentation searched other than minimum documentation to the extent that such documents are included in the fields searched<br><br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 3800629 B2 (SEIKO EPSON CORPORATION) 26 July 2006 (2006-07-26)<br>specification, p. 8, upper right column, line 21 to p. 9, left column, line 16 | 1-3, 5, 7-8, 10 |
| A | specification, p. 8, upper right column, line 21 to p. 9, left column, line 16 | 4, 6, 9, 11 |
| Y | JP 2005-202291 A (SEIKO EPSON CORPORATION) 28 July 2005 (2005-07-28)<br>paragraphs [0025]-[0027] | 1-3, 5, 7-8, 10 |
| A | paragraphs [0025]-[0027] | 4, 6, 9, 11 |
| Y | JP 2015-129976 A (EHS LENS PHILIPPINES INC.) 16 July 2015 (2015-07-16)<br>paragraphs [0095]-[0097] | 1-3, 5, 7-8, 10 |
| A | paragraphs [0095]-[0097] | 4, 6, 9, 11 |
| Y | JP 2013-237261 A (HOYA CORPORATION) 28 November 2013 (2013-11-28)<br>paragraph [0059] | 1-3, 5, 7-8, 10 |
| A | paragraph [0059] | 4, 6, 9, 11 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/041189** |

### C.    DOCUMENTS CONSIDERED TO BE RELEVANT

| Category* | Citation of document, with indication, where appropriate, of the relevant passages | Relevant to claim No. |
|---|---|---|
| Y | JP 2008-503773 A (ESSILOR INTERNATIONAL (COMPAGNIE GENERALE DOPTIQUE)) 07 February 2008 (2008-02-07) paragraph [0008] | 1-3, 5, 7-8, 10 |
| A | paragraph [0008] | 4, 6, 9, 11 |
| Y | JP 2022-511524 A (MEDICIM NV) 31 January 2022 (2022-01-31) paragraph [0026] | 1-3, 5, 7-8, 10 |
| A | paragraph [0026] | 4, 6, 9, 11 |
| Y | JP 2013-221886 A (RAILWAY TECHNICAL RESEARCH INSTITUTE) 28 October 2013 (2013-10-28) paragraphs [0039], [0040] | 1-3, 5, 7-8, 10 |
| A | paragraphs [0039], [0040] | 4, 6, 9, 11 |
| Y | JP 2016-174905 A (KABUSHIKI KAISHA TOSHIBA) 06 October 2016 (2016-10-06) claims 1, 12 | 1-3, 5, 7-8, 10 |
| A | claims 1, 12 | 4, 6, 9, 11 |
| A | JP 2002-538507 A (SHAMIR OPTICAL INDUSTRY LTD.) 12 November 2002 (2002-11-12) | 1-11 |

Form PCT/ISA/210 (second sheet) (January 2015)

**EP 4 682 620 A1**

### INTERNATIONAL SEARCH REPORT
Information on patent family members

International application No.

**PCT/JP2023/041189**

| Patent document cited in search report | | | Publication date (day/month/year) | Patent family member(s) | | | Publication date (day/month/year) |
|---|---|---|---|---|---|---|---|
| JP | 3800629 | B2 | 26 July 2006 | US | 5926250 | A | |
| | | | | column 15, line 17 to column 16, line 21 | | | |
| | | | | WO | 1997/019383 | A1 | |
| | | | | EP | 809127 | A1 | |
| JP | 2005-202291 | A | 28 July 2005 | US | 2005/0157254 | A1 | |
| | | | | paragraphs [0057]-[0062] | | | |
| | | | | EP | 1555588 | A2 | |
| JP | 2015-129976 | A | 16 July 2015 | US | 2012/0086910 | A1 | |
| | | | | paragraphs [0116]-[0118] | | | |
| | | | | EP | 2442171 | A2 | |
| | | | | CN | 102445767 | A | |
| JP | 2013-237261 | A | 28 November 2013 | US | 2013/0247619 | A1 | |
| | | | | paragraphs [0082], [0083] | | | |
| | | | | EP | 2645155 | A2 | |
| | | | | CN | 103364964 | A | |
| JP | 2008-503773 | A | 07 February 2008 | WO | 2006/009738 | A1 | |
| | | | | specification, p. 3, lines 17-20 | | | |
| | | | | US | 6955433 | B1 | |
| | | | | EP | 1756651 | A1 | |
| | | | | TW | 200613796 | A | |
| JP | 2022-511524 | A | 31 January 2022 | US | 2022/0036653 | A1 | |
| | | | | paragraph [0048] | | | |
| | | | | WO | 2020/127632 | A1 | |
| | | | | EP | 3899876 | A1 | |
| | | | | CN | 113168731 | A | |
| | | | | KR 10-2021-0108429 | | A | |
| JP | 2013-221886 | A | 28 October 2013 | (Family: none) | | | |
| JP | 2016-174905 | A | 06 October 2016 | US | 2016/0275653 | A1 | |
| | | | | claims 1, 12 | | | |
| JP | 2002-538507 | A | 12 November 2002 | US | 6302540 | B1 | |
| | | | | WO | 2000/052517 | A1 | |
| | | | | EP | 1076840 | A1 | |
| | | | | CA | 2329714 | A1 | |
| | | | | AU | 2458000 | A | |
| | | | | CN | 1302386 | A | |

Form PCT/ISA/210 (patent family annex) (January 2015)

**EP 4 682 620 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050254007

- WO 97019382 A